# EUROPEAN PATENT APPLICATION

(11) **EP 1 596 413 A1**
(43) Date of publication of application: **16.11.2005**
(21) Application number: 05103366.0
(22) Date of filing: 26.04.2005
(51) Int. Cl.: H01J 17/49

(54) **Plasma display panel and method of fabricating the same**

(30) Priority: 03.05.2004 KR 2004030990
(71) Applicant: Samsung SDI Co., Ltd., Suwon-si Gyeonggi-do (KR)
(72) Inventor: Song, Jung-Suk, Gyeonggi-do (KR)
(74) Representative: Hengelhaupt, Jürgen

(57) **Abstract**

Provided are a plasma display panel and a method of fabricating the same. The method includes the operation of preparing a transparent substrate; applying a raw material for forming barrier ribs on the substrate; applying a photoresist on the raw material for forming barrier ribs; exposing and developing the photoresist to form first barrier ribs disposed in one direction on the substrate and second barrier ribs disposed in another direction to define discharge spaces; injecting an etchant through openings of the photoresist to etch the raw material so that heights of the first and second barrier ribs become different from each other, and to form a gas exhaustion path for exhausting impure gas during a vacuum exhaustion process; and removing the photoresist remaining on the raw material to complete the barrier ribs including the first and second barrier ribs.

## Description

### CROSS-REFERENCE TO RELATED PATENT APPLICATIONS

This application claims the benefit of Korean Patent Application No. 10-2004-0030990, filed on May 3, 2004, in the Korean Intellectual Property Office, the disclosure of which is incorporated herein in its entirety by reference.

### REARGROUND OF THE INVENTION

### 1. Field of the Invention

The present invention relates to a plasma display panel, and more particularly, to a plasma display panel having barrier ribs having different heights from each other to form an air exhaustion path and a method of fabricating the plasma display panel.

### 2. Description of the Related Art

In general, a plasma display panel is a flat panel display device displaying images. In the plasma display panel, discharge electrodes are formed on facing surfaces of a plurality of substrates and a discharge gas is injected between the plurality of substrates, predetermined voltages are applied to the discharge electrodes to generate ultraviolet ray in a discharge space, and the ultraviolet ray excites phosphor material of a phosphor layer, and then, the image is displayed using visible light generated by the excited phosphor layer.

The conventional plasma display panel includes a front substrate, a rear substrate facing the front substrate, pairs of sustain discharge electrodes disposed on an inner surface of the front substrate, a front dielectric layer covering the sustain discharge electrode pairs, a protective layer coated on the front dielectric layer, address electrodes disposed on an inner surface of the rear substrate, a rear dielectric layer covering the address electrodes, barrier ribs disposed between the front substrate and the rear substrate, and red, green, and blue phosphor layers coated in the barrier ribs.

Here, in order to fabricate the barrier ribs, the rear substrate is cleaned, a raw material for the barrier ribs is entirely applied on the upper surface of the rear substrate, the applied raw material is dried, a photo mask is aligned to expose and develop the barrier ribs, the raw material on the portion where the barrier ribs will not be formed is removed in a sand blast process, remaining photoresist is separated, and the barrier ribs are baked.

According to the conventional barrier ribs fabricated through the above processes, an abrasive agent such as CaCO₃ is injected onto the substrate with high pressure and fine scratches may be formed on the rear substrate during the sand blast process.

Recently, an etching process has been generally used, that is, the raw material for barrier ribs is applied on the substrate, a photoresist film is attached thereon, the photoresist is exposed and developed, and an etchant is injected onto the portion where discharge spaces will be formed to form the barrier ribs.

Korean Laid-open Patent No. 2000-13228 discloses barrier ribs having heights larger than widths thereof by etching after forming recesses on the substrate, and Korean Laid-open Patent No, 1993-8917 discloses a method of forming barrier ribs by directly etching the substrate.

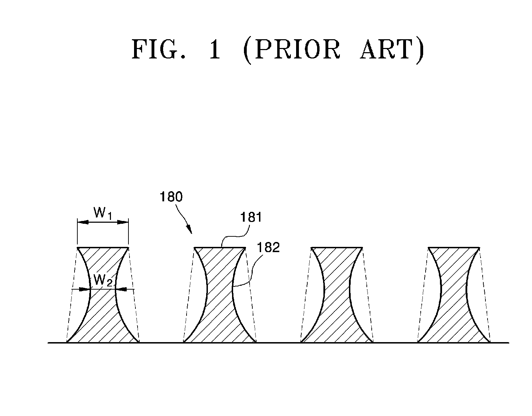

However, referring to FIG. 1, the conventional barrier rib 180 formed by the etching process has a profile that has a hollow portion. Accordingly, a width (W1) of an upper end portion 181 of the barrier rib 180 is much larger than a width (W2) of a center portion 182 of the barrier rib 180.

For example, in a case where the width of the upper end portion 181 of the barrier rib 180 is formed to be 40µm, the width of the center portion 182 of the barrier rib 180 becomes about 20µm by the etching mechanism. Therefore, when phosphor layers emit lights, light emitting path may be interrupted by the barrier rib, and the light emitting efficiency is lowered due to a reduced discharge space.

In addition, the conventional plasma display panel includes the protective layer having a strong humidity-absorption and a lot of impure gas in the porous phosphor layer, and the impure gas remaining in the panel assembly badly affects a life span characteristic of the panel, and thus, a permanent residual image and unstable discharge can be caused by the impure gas.

Therefore, a lot of impure gas is discharged out of the panel during a vacuum exhaustion process, however, in the conventional plasma display panel having no space between the substrate and the upper end portion of the barrier rib, it is difficult to exhaust the impure gas completely.

### SUMMARY OF THE INVENTION

The present invention provides a plasma display panel providing a path, through which gas can be exhausted in a vacuum exhaustion process, by forming barrier ribs having different heights from each other, and a method of fabricating the plasma display panel.

The present invention also provides a plasma display panel forming barrier ribs having different heights from each other by controlling widths and heights of the barrier rib in an etching process, and a method of fabricating the plasma display panel.

According to an aspect of the present invention, there is provided a method of fabricating a plasma display panel, the method including the operations of: preparing a transparent substrate; applying a raw material for forming barrier ribs on the substrate; applying a photoresist on the raw material for forming barrier ribs; exposing and developing the photoresist to form first barrier ribs disposed in one direction on the substrate and second barrier ribs disposed in another direction to define discharge spaces; injecting an etchant through openings of the photoresist to etch the raw material so that heights of the first and second barrier ribs become different from each other, and to form a gas exhaustion path for exhausting impure gas during a vacuum exhaustion process; and removing the photoresist remaining on the raw material to complete the barrier ribs including the first and second barrier ribs.

In the operation of forming of the barrier rib pattern, the second barrier ribs may respectively connect pairs of adjacent first barrier ribs in alternate pairs to define discharge cells, in order to provide another gas exhaustion path between the first barrier ribs that are not connected to each other.

A distance between the first barrier ribs that define a non-discharge region may be narrower than a distance between the pair of first barrier ribs that define the discharge cell.

According to another aspect of the present invention, there is provided a plasma display panel including: a front substrate; a plurality pairs of sustain discharge electrodes formed on an inner surface of the front substrate; a front dielectric layer covering the sustain discharge electrode pairs; a rear substrate facing the front substrate; a plurality of address electrodes formed on an inner surface of the rear substrate and disposed in a direction of crossing the sustain discharge electrode pairs; a rear dielectric layer covering the address electrodes; a plurality of barrier ribs including first barrier ribs that are disposed between the front and rear substrates and arranged in one direction of the substrates, and second barrier ribs that extend from the first barrier ribs in different direction to define discharge cells and have different heights from those of the first barrier ribs to provide a gas exhaustion path for exhausting impure gas during a vacuum exhaustion process; and red, green, and blue phosphor layers applied in the discharge cells.

The height of the first barrier rib may be relatively lower than that of the second barrier ribs, and the gas exhaustion path corresponding to the height difference between the first and second barrier ribs may be formed above the first barrier ribs.

The first barrier ribs may be arranged in a direction of crossing the address electrodes, the second barrier ribs are arranged in parallel to the address electrodes, and the second barrier ribs may extend from the inner sides of the adjacent first barrier ribs toward the facing first barrier ribs to define the discharge cells.

A non-discharge region providing an additional gas exhaustion path for exhausting the impure gas may be further formed between the pair of first barrier ribs defining the discharge cell with the second barrier ribs and the other pair of first barrier ribs adjacent to the above pair.

A distance between the first barrier ribs that define the non-discharge region may be narrower than a distance between the pair of first barrier ribs that define the discharge cell.

### BRIEF DESCRIPTION OF THE DRAWINGS

The above and other features and advantages of the present invention will become more apparent by describing in detail exemplary embodiments thereof with reference to the attached drawings in which:

FIG. 1 is a cross-sectional view of conventional barrier ribs;

FIG. 2 is an exploded perspective view of a part of a plasma display panel according to the present invention;

FIG. 3 is a cross-sectional view of the plasma display panel in an assembled status;

FIGS. 4A through 4I cross-sectional views of processes fabricating the barrier ribs of FIG. 2;

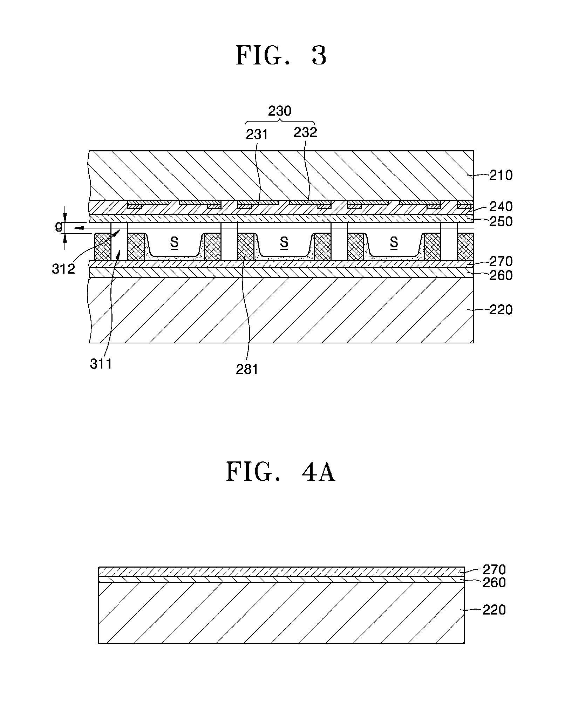

FIG. 4A is a cross-sectional view of a status where address electrodes and a dielectric layer are formed on a substrate;

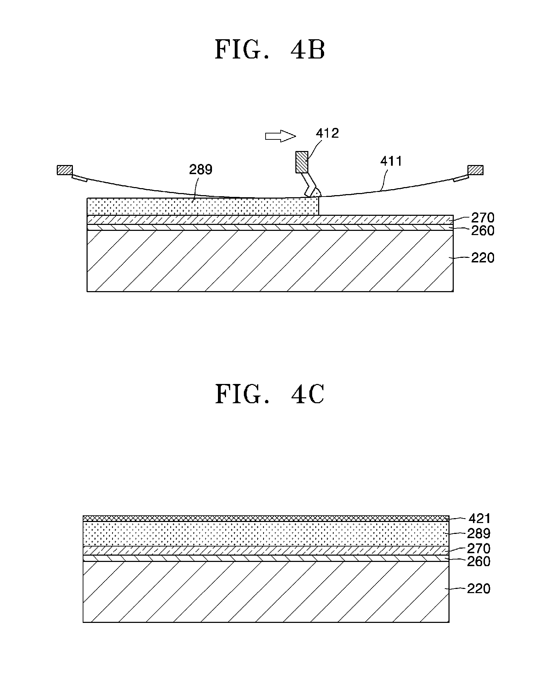

FIG. 4B is a cross-sectional view of a status where a raw material for barrier ribs is applied on the substrate of FIG. 4A;

FIG. 4C is a cross-sectional view of a status where a photoresist is applied on the substrate of FIG. 4B;

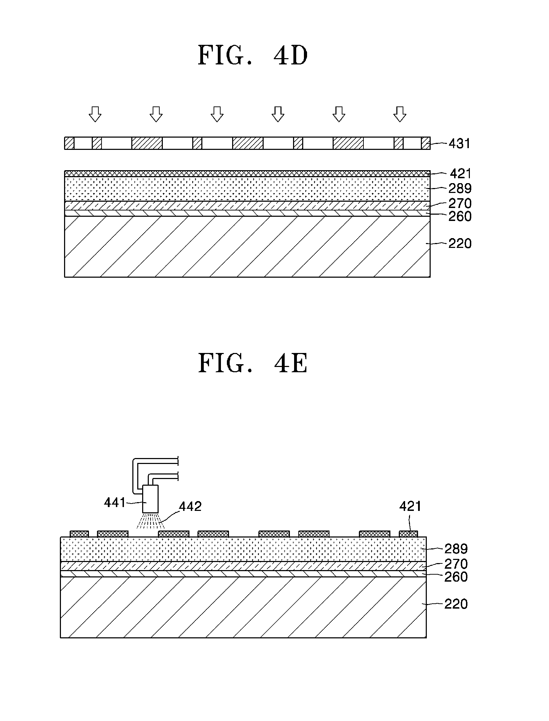

FIG. 4D is a cross-sectional view of a status where the photoresist is exposed and developed on the substrate of FIG. 4C;

FIG. 4E is a cross-sectional view of etching the substrate of FIG. 4D;

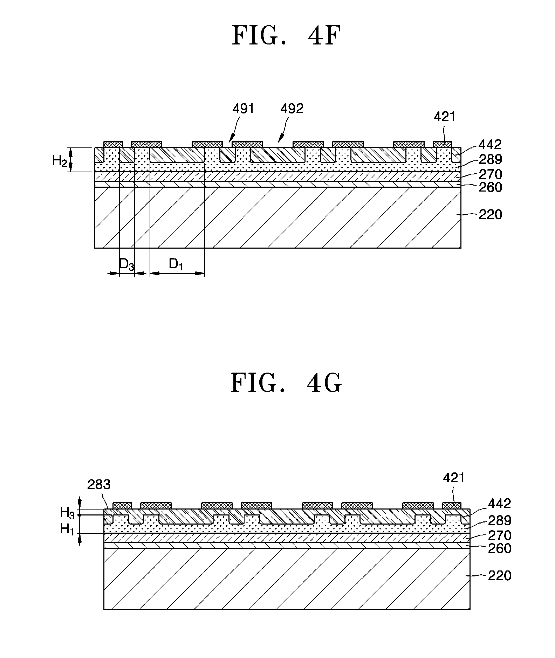

FIG. 4F is a cross-sectional view of etching the substrate of FIG. 4E;

FIG. 4G is a cross-sectional view of etching the substrate of FIG. 4F;

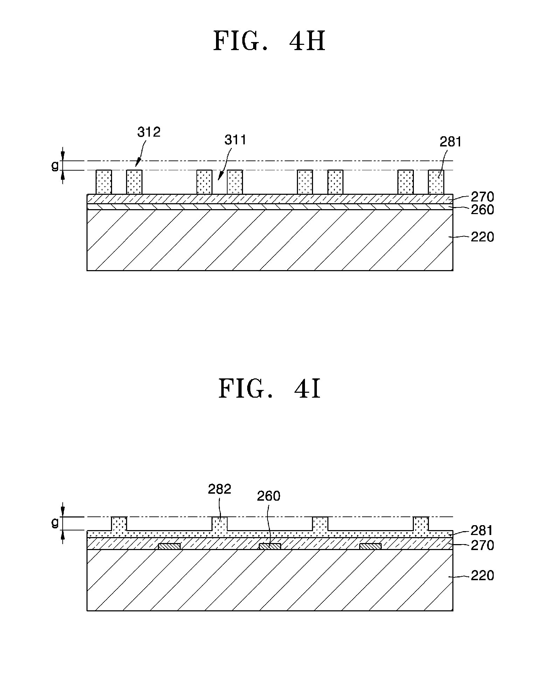

FIG. 4H is a cross-sectional view of the substrate of FIG. 4G, on which the etching process is completed;

FIG. 4I is a cross-sectional view of the substrate of FIG. 4G, on which the etching process is completed, from a different point of view; and

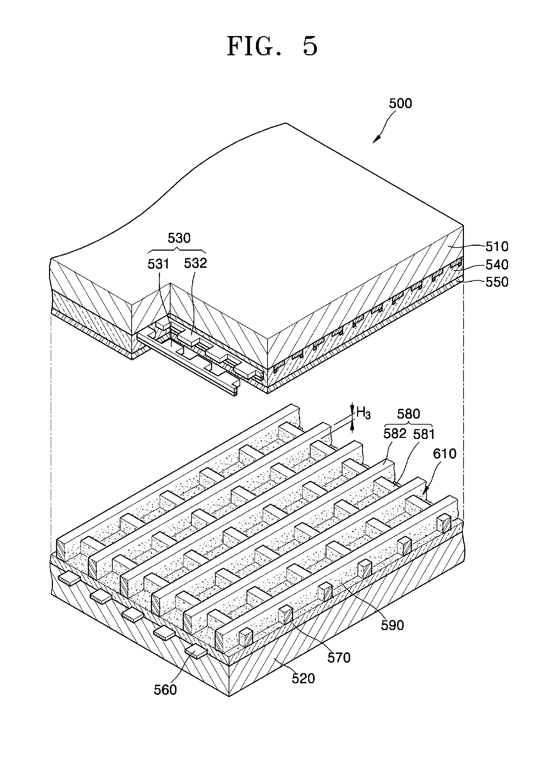

FIG. 5 is an exploded perspective view of a part of a plasma display panel according to another embodiment of the present invention.

### DETAILED DESCRIPTION OF THE INVENTION

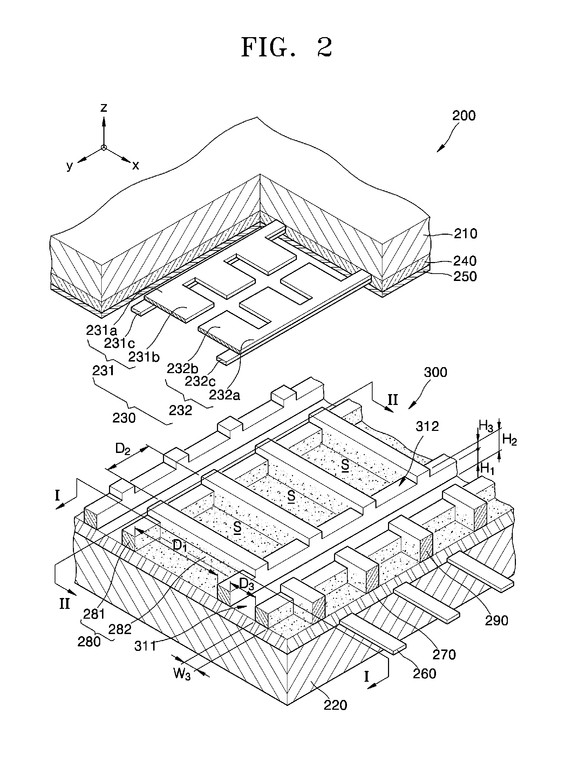

FIG. 2 is a view of a plasma display panel 200 according to an embodiment of the present invention.

Referring to FIG. 2, the plasma display panel 200 includes a front substrate 210, and a rear substrate 220 facing the front substrate 210.

Pairs of sustain discharge electrodes 230 are disposed on an inner surface of the front substrate 210. Each pair of sustain electrodes 230 includes an X electrode 231 and a Y electrode 232. The X electrode 231 includes a first transparent electrode line 231 a of strip shape, a first protrusion 231 b protruding from the first transparent electrode line 231a toward the Y electrode 232, and a first bus electrode line 231c formed along an edge of the first transparent electrode line 231 a. The Y electrode 232 includes a second transparent electrode line 232a of strip shape, a second protrusion 232b protruding from the second transparent electrode line 232a toward the X electrode 231, and a second bus electrode line 232c formed along an edge of the second transparent electrode line 232a.

It is desirable that the first transparent electrode line 231 a, the first protrusion 231 b connected integrally to the first transparent electrode line 231 a, the second transparent electrode line 232a, and the second protrusion 232b connected integrally to the second electrode line 232a are formed of transparent conductive layer, for example, an indium tin oxide (ITO) film. In addition, it is desirable that the first bus electrode line 231c and the second bus electrode line 232c are formed of a material having high conductivity, for example, Ag paste, in order to reduce electric resistances of the first and second transparent electrode lines 231 a and 232a.

A front dielectric layer 240 is formed on the front substrate 210 in order to cover the X and Y electrodes 231 and 232, and a protective layer 250 such as an MgO layer is deposited on the front dielectric layer 240.

Address electrodes 260 are formed on an inner surface of the rear substrate 220. The address electrodes 260 are disposed to cross the sustain electrode pairs 230. A rear dielectric layer 270 is formed on the address electrodes 260 in order to cover the address electrodes 260. Barrier ribs 280 are formed on the rear dielectric layer 270 in order to define discharge cells and prevent cross talk from generating. Red, green, or blue phosphor layer 290 is coated on the upper surface of the rear dielectric layer 270 and inner side surfaces of the barrier ribs 280 in every discharge cell.

Here, in the plasma display panel 200, gas exhaustion paths, through which impure gas can be exhausted in a vacuum exhaustion process, are formed between the barrier ribs, and the barrier ribs are formed to have different heights from each other in an etching method to form an additional gas exhaustion path.

The gas exhaustion paths will be described in more detail as follows.

The barrier ribs 280 are formed on the rear substrate 220. The barrier ribs 280 include first barrier ribs 281 disposed in a direction of crossing the address electrodes 260 (Y direction), and second barrier ribs 282 disposed in parallel to the address electrodes 260 (X direction).

The first barrier ribs 281 are disposed in the Y direction of the rear substrate 220 in strip pattern, and the second barrier ribs 282 extend from the inner walls of the adjacent pair of first barrier ribs 281 toward each other to define the unit discharge cell.

That is, the second barrier rib 282 connects two adjacent first barrier ribs 281 to define the discharge cell, however, the second barrier ribs 282 connect the first barrier ribs 281 in alternate pairs to form first gas exhaustion paths 311 between the first barrier ribs 281, which are not connected by the second barrier rib 282. The first gas exhaustion path 311 is a non-discharge region.

The first and second barrier ribs 281 and 282 are coupled integrally to each other, and the discharge cell defined by the barrier ribs is a square shape. Otherwise, the barrier ribs 280 can be formed in various shapes such as a waffle type, a meander type, or a delta type, and the discharge space can be formed as a circle, a triangle, or a hexagon.

The discharge spaces (S) are continuously formed in a direction of crossing the address electrodes 260 (Y direction), and the barrier ribs 280 are formed in ladder structure along the Y direction of the panel 200. The ladder assemblies are disposed along the X direction of the panel 200 to be separated predetermined intervals from each other.

In the present embodiment, the first gas exhaustion path 311 is formed in the same direction as the first barrier ribs 281, however, the direction of the gas exhaustion path is not limited to one direction if it can form a path exhausting the impure gas.

Here, the barrier ribs 281 disposed in one direction are stepped from the barrier ribs 282 disposed in another direction to form second gas exhaustion paths 312.

That is, a height (H1) of the first barrier rib 281 is lower than a height (H2) of the second barrier rib 282. The height H1 of the first barrier rib 281 disposed at both ends of the second barrier ribs 282 to connect the two adjacent second barrier ribs 282 is lower than the height H2 of the second barrier rib 282 as much as H3.

Accordingly, when the barrier ribs 280 are coupled to the front substrate 210, the second gas exhaustion paths 312 can be formed between the lower surface of the front substrate 210 and the upper end portions of the barrier ribs 280 due to the height difference H3. The second gas exhaustion path 312 can be formed at every first barrier rib 281 connecting the second barrier ribs 282, or can be selectively formed at a part of the first barrier rib 281.

As described above, the height H1 of the first barrier rib 281 is lower than the height H2 of the second barrier rib 282 to form the second gas exhaustion path 312 when the barrier ribs are coupled to the front substrate 210.

FIG. 3 is a cross-sectional view of the front substrate 210 and the rear substrate 220 of FIG. 2 coupled to each other taken along line I-I.

Here, the same reference numerals denote the same elements performing the same functions as those of the previous drawings.

Referring to FIG. 3, the first barrier ribs 291 are disposed between the front substrate 210 and the rear substrate 220. There is the height difference H3 between the heights of the first barrier rib 281 and the second barrier rib 282 (refer to FIG. 2).

Therefore, a gap (g) is formed between the front substrate 210 and the upper end portion of the first barrier rib 281, and the gap (g) forms the second gas exhaustion path 312. The second gas exhaustion path 312 provides a path denoted by arrow, through which the gas can be exhausted, in the vacuum exhaustion process.

In addition, the first gas exhaustion path 311 is formed on the non-discharge region between the pair of adjacent two first barrier ribs 281 defining the discharge cell (S). The first gas exhaustion path 311 is communicated with the second gas exhaustion path 312.

The step between the first barrier rib 281 and the second barrier rib 282 can be formed by an etching process.

Processes of fabricating the barrier ribs 280 will be described in detail with reference to FIGS. 4A through 4I.

Referring to FIG. 4A, the rear substrate 220 formed of a transparent glass is prepared. The address electrode 260 is printed on the rear substrate 220 and baked. The address electrode 260 is formed in a strip pattern along a direction (Y direction) of the rear substrate 220. Then, the rear dielectric layer 270 is coated on the rear substrate 220 to cover the address electrode 260.

In addition, referring to FIG. 4B, a raw material 289 for forming barrier rib is entirely printed on the rear substrate 220. The raw material 289 can be entirely coated on the rear substrate 220 in various ways. In the present embodiment, the raw material 289 is loaded on a screen 411, and a squeeze 412 proceeds forward to apply the raw material 289 on the entire substrate 220.

In addition, referring to FIG. 4C, a photoresist 421 is applied on an upper surface of the raw material 289. The photoresist 421 is entirely applied on the raw material 289.

A photo mask 431 is aligned to be separated a predetermined interval from the photo resist 421 as shown in FIG. 4D, and ultraviolet ray is radiated to perform an exposure and a development processes.

Accordingly, on the surface of the raw material 289 for forming the barrier ribs, the photoresist 421 remains on the portions corresponding to the barrier ribs that will be formed, and the photoresist 421 on the other portions is removed as shown in FIG. 4E.

When the pattern of photoresist 421 corresponding to the barrier ribs remains, an etchant 442 is injected through a nozzle 441 from the upper portion of the photoresist 421 to corrode the pattern for a predetermined time in order to obtain the barrier ribs of desired shape. Here, the width of the barrier rib is larger than the height thereof.

The corrosion of the raw material 289 by the etchant 442 is shown in FIGS. 4F and 4G.

That is, referring to FIG. 4F, the etchant 442 starts the corrosion from the surface where the photoresist 421 is not formed. Here, the etchant 442 proceeds from the surface of the raw material 289 with isotropic etching speed in both vertical and horizontal directions.

Here, referring to FIG. 2, an etched distance (D3) on the portion where the first gas exhaustion path 311 is formed is narrower than an etched distance (D1) at the portion where the discharge cell will be formed.

For example, the distance D1 between the pair of adjacent first barrier ribs 281 is about 493µm and a distance D2 between the pair of adjacent second barrier ribs 282 is about 228µm, the distance D3 of the first gas exhaustion path 311 is about 100µm. That is, the distance D3 of the first gas exhaustion path 311 is relatively narrower than the distance D1 between the first barrier ribs 281. In addition, width of the first barrier rib 281 is the same as the width W3 of the second barrier rib 282, that is, about 50µm, and the height H2 of the barrier rib 280 is about 120µm.

Referring to FIGS. 4F and 4G, when the etchant 442 is injected through an opening 491 in the photoresist 421, for example, an opening of 50µm, the etching of the barrier rib 280 is performed with the isotropic etching speed in both vertical and horizontal directions.

Here, the etching distance D3 of the portion where the first gas exhaustion path 311 will be formed should be 100µm to left and right directions while the entire height of the barrier rib 280 should be etched to be 120µm, and thus, the etching in the horizontal direction further proceeds toward the first barrier ribs 281 forming the first gas exhaustion path 311. Therefore, the height H1 of the first barrier rib 281 becomes lower than the height H2 of the second barrier rib 282 as much as H3. Unexplained reference numeral 283 denotes an upper end line of the second barrier rib 282.

On the contrary, when the etchant 442 is injected through an opening 492 of the photoresist 421 located at the discharge space, the height H2 of the second barrier rib 282 becomes higher than the height H1 of the first barrier rib 281 by controlling the distance of the opening 492.

Since the width D3 of the first gas exhaustion path 311 formed between the pair of adjacent first barrier ribs 281 is different from the distance D1 between the first barrier ribs 281 or the distance D2 between the second barrier ribs 282 defining the discharge spaces, the first barrier ribs 281 disposed at both sides of the first gas exhaustion path 311 having relatively narrower width is etched larger than the second barrier ribs 282 defining the discharge space having wider width due to the isotropic etching speed of the etchant 442, and thus, the upper end portion of the first barrier rib 281 is hollowed. Therefore, the heights of the first and second barrier ribs 281 and 282 are different from each other.

Next, when the remaining photoresist 421 is removed, and then, the height H1 of the first barrier ribs 281 disposed on both sides of the first gas exhaustion path 311 becomes lower than the height H2 of the second barrier rib 282 as much as H3 due to the isotropic etching speed of the etchant 442 as shown in FIGS. 4H and 4I. Therefore, the gap (g) is generated between the upper end portions of the first barrier rib 281 and the second barrier rib 282. The gap (g) forms the second gas exhaustion path 312.

FIG. 5 is a perspective view of a plasma display panel 500 according to a second embodiment of the present invention.

Referring to FIG. 5, the plasma display panel 500 includes a front substrate 510 and a rear substrate 520.

Pairs of sustain electrodes 530 including X electrodes 531 and Y electrodes 532 facing the X electrodes 531 are formed on an inner surface of the front substrate 510. The sustain electrode pairs 530 are covered by a front dielectric layer 540, and a protective layer 550 is deposited on the surface of the front dielectric layer 540.

Address electrodes 560 are disposed on the front substrate 520, and the address electrodes 560 are covered by a rear dielectric layer 570. In addition, barrier ribs 580 are formed on the rear dielectric layer 570, and red, green, and blue phosphor layers 590 are coated on inner side surfaces of the barrier ribs 580.

Here, the barrier ribs 580 include first barrier ribs 581 disposed in a direction of crossing the address electrode 560, and second barrier ribs 582 disposed in parallel to the address electrodes 560. The first and second barrier ribs 581 and 582 form lattice shape by being coupled to each other.

Gas exhaustion paths 610 are formed above upper end portions of the first barrier ribs 581. The gas exhaustion path 610 is formed by the digging of the upper end portion of the first barrier rib 581, which is caused by the isotropic etching speed of the etchant in the unit discharge cell defined by the first barrier rib 581 and the second barrier rib 581 that have different lengths from each other.

According to the plasma display panel and the method of fabricating the panel of the present invention, following effects can be obtained.

Since the raw material for forming barrier ribs is etched by the etchant having isotropic etching speed, the height of the barrier rib disposed in one desired direction can be formed to be different from the height of the barrier rib disposed in another direction by the etching mechanism. Accordingly, a predetermined space can be formed above the barrier ribs, and thus, the gas exhaustion path, through which the gas can be exhausted during the vacuum exhaustion process, can be formed.

In addition, since the gas exhaustion path is formed between the upper end surfaces of some barrier ribs and the lower surface of the substrate, the impure gas can be exhausted sufficiently from a center portion of the panel assembly, on which the ventilation performance is poor. Therefore, the electric and optical characteristics of the panel assembly can be improved greatly.

The etchant can be injected finely by controlling the width of the opening in the photoresist, and thus, the barrier rib having uniform thickness can be formed by the etching mechanism.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of fabricating a plasma display panel, the method comprising the operations of:
preparing a transparent substrate;
applying a raw material for forming barrier ribs on the substrate;
applying a photoresist on the raw material for forming barrier ribs;
exposing and developing the photoresist to form first barrier ribs disposed in one direction on the substrate and second barrier ribs disposed in another direction to define discharge spaces;
injecting an etchant through openings of the photoresist to etch the raw material so that heights of the first and second barrier ribs become different from each other, and to form a gas exhaustion path for exhausting impure gas during a vacuum exhaustion process; and
removing the photoresist remaining on the raw material to complete the barrier ribs including the first and second barrier ribs.

2. The method of claim 1, wherein in the forming of the barrier rib pattern, the second barrier ribs respectively connect pairs of adjacent first barrier ribs in alternate pairs to define discharge cells, in order to provide another gas exhaustion path between the first barrier ribs that are not connected to each other.

3. The method of claim 2, wherein a distance between the first barrier ribs that define a non-discharge region is narrower than a distance between the pair of first barrier ribs that define the discharge cell.

4. A plasma display panel comprising:
a front substrate;
a plurality pairs of sustain discharge electrodes formed on an inner surface of the front substrate;
a front dielectric layer covering the sustain discharge electrode pairs;
a rear substrate facing the front substrate;
a plurality of address electrodes formed on an inner surface of the rear substrate and disposed in a direction of crossing the sustain discharge electrode pairs;
a rear dielectric layer covering the address electrodes;
a plurality of barrier ribs including first barrier ribs that are disposed between the front and rear substrates and arranged in one direction of the substrates, and second barrier ribs that extend from the first barrier ribs in different direction to define discharge cells and have different heights from those of the first barrier ribs to provide a gas exhaustion path for exhausting impure gas during a vacuum exhaustion process; and
red, green, and blue phosphor layers applied in the discharge cells.

5. The plasma display panel of claim 4, wherein the height of the first barrier rib is relatively lower than that of the second barrier ribs, and the gas exhaustion path corresponding to the height difference between the first and second barrier ribs is formed above the first barrier ribs.

6. The plasma display panel of claim 5, wherein the first barrier ribs are arranged in a direction of crossing the address electrodes, the second barrier ribs are arranged in parallel to the address electrodes, and the second barrier ribs extend from the inner sides of the adjacent first barrier ribs toward the facing first barrier ribs to define the discharge cells.

7. The plasma display panel of claim 4, wherein a non-discharge region providing an additional gas exhaustion path for exhausting the impure gas is further formed between the pair of first barrier ribs defining the discharge cell with the second barrier ribs and the other pair of first barrier ribs adjacent to the above pair.

8. The plasma display panel of claim 7, wherein a distance between the first barrier ribs that define the non-discharge region is narrower than a distance between the pair of first barrier ribs that define the discharge cell.
